**Europäisches Patentamt**

**European Patent Office**

**Office européen des brevets**

(19)

(11) Veröffentlichungsnummer: **0 187 790**
**B1**

# (12) EUROPÄISCHE PATENTSCHRIFT

(45) Veröffentlichungstag der Patentschrift:
**16.09.87**

(21) Anmeldenummer: **85903260.9**

(22) Anmeldetag: **27.06.85**

(86) Internationale Anmeldenummer:
**PCT/EP 85/00308**

(87) Internationale Veröffentlichungsnummer:
**WO 86/00267 (16.01.86** Gazette 86/2)

(51) Int. Cl.⁴: **B 60 R 9/12**

(54) **TRÄGERANORDNUNG.**

(30) Priorität: **27.06.84 DE 8419222 U**

(43) Veröffentlichungstag der Anmeldung:
**23.07.86 Patentblatt 86/30**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**EP - A - 0 065 218**
**DE - A - 3 104 163**
**US - A - 4 383 627**

(73) Patentinhaber: **Möbius, Ulrich, Fraunhoferstrasse 45,
D-6450 Hanau (DE)**

(72) Erfinder: **Möbius, Ulrich, Fraunhoferstrasse 45,
D-6450 Hanau (DE)**

(74) Vertreter: **Stoffregen, Hans-Herbert, Dr. Dipl.-Phys. et al,
Patentanwälte Strasse & Stoffregen Salzstrasse 11a
Postfach 2144, D-6450 Hanau/Main 1 (DE)**

## Beschreibung

Die Erfindung bezieht sich auf eine Trägeranordnung zur Aufnahme von auf einem Kraftfahrzeugdach aufzubringenden Lasten mit vorzugsweise im Abstand zueinander, in Querrichtung zum Fahrzeugdach angeordneten Tragelementen, die zur Aufnahme von Befestigungselementen wie zum Beispiel Skihaltern Profilschienen aufweisen.

Eine entsprechende Trägeranordnung ist zum Beispiel der EP-A-0065218 zu entnehmen. Dabei wird jedes Tragelement über im Vorder- und Seitenbereich vorhandene Gummielemente auf das Kraftfahrzeugdach abgestützt, wobei die Lasten auf die stabilen Seitenzonen des Kraftfahrzeugdaches übertragen werden. Die Befestigung der Tragelemente selbst kann sowohl an Fahrzeugholmen, an Fahrzeugdachrinnen oder z.B. über im Dach lösbar eingelassene Befestigungssteine erfolgen. In Längsrichtung eines jeden Tragelementes sind Profilschienen eingelassen, in denen Halteelemente von zum Beispiel Gepäckbrücken, Fahrradhaltern, Kofferboxen, Surfbretthaltern oder Skihaltern befestigbar sind.

Andere bekannte zum Kraftfahrzeugdach beabstandete Trägeranordnungen weisen ebenfalls Profilschienen auf, in die auf die zu transportierenden Lasten abgestimmte Halterungen einzubringen sind. Um dabei sicherzustellen, dass die Halterungen nicht unkontrolliert aus den Profilschienen entfernt werden, ist es erforderlich, beide Endbereiche einer jeden Profilschiene vorzugsweise mittels Schlössern zu verriegeln. Da eine solche Handhabung, also das Betätigen von Schlüsseln im Dachbereich eines Kraftfahrzeuges umständlich ist, muss immer wieder festgestellt werden, dass ensprechende Profilschienen nicht verschlossen werden. In der kalten Jahreszeit ist zudem zu beobachten, dass die Schlösser vereisen.

Aufgabe der vorliegenden Erfindung ist es, eine Trägeranordnung der eingangs bezeichneten Art, insbesondere eine Trägeranordnung wie sie der EP-A-0065218 zu entnehmen ist, derart auszubilden, dass in die Profilschienen problemlos Halterungen eingebracht werden können, ohne dass notwendigerweise mit Schlüsseln zu betätigende Absperrelemente erforderlich sind, und zudem der Vorteil gegeben sein soll, dass eine Diebstahlhemmung gegeben ist.

Die Aufgabe wird erfindungsgemäss dadurch gelöst, dass zumindest eine zum Einbringen von Befestigungselementen bestimmte Erweiterung bzw. ein freies Ende jeder Profilschiene mittels einer Drucktaste verschliessbar ist. Vorzugsweise ist dabei nur ein freies Ende der Profilschiene mit der Drucktaste verschliessbar, wohingegen das andere freie Ende der Profilschiene von dem Tragelement selbst verschlossen ist. Es muss demzufolge nur noch die Drucktaste betätigt werden, um die Halterungen in die Profilschiene hineinschieben oder aus dieser entfernten zu können. Ersteres erfolgt dadurch, dass das Halteelement mit dem in die Profilschiene einzubringenden Abschnitt auf die Drucktaste gesetzt und in Richtung der Profilschiene bewegt wird, wodurch die Drucktaste —

sofern sie entriegelt ist — in Richtung des Kraftfahrzeugdaches bewegt, verschoben wird und damit die Profilschiene freigibt. Das Verschlusselement selbst sollte dabei vorzugsweise von Abschnitten von Seitenwandungen geführt sein, die die Profilschiene seitlich begrenzen. Dadurch ergibt sich eine geschlossene Oberfläche und ein ansprechendes Äusseres. Dies ist insbesondere bei einer Konstruktion von Vorteil, bei der die Trägeranordnung ein plattenförmiges Basiselement umfasst, wie es der EP-A-0065218 zu entnehmen ist.

Um die Drucktaste diebstahlhemmend auszubilden, kann nach einer weiteren Ausgestaltung in die Drucktaste ein Verschlusselement eingreifen, das ein Herunterdrücken verhindert. Zu diesem Zweck kann zum Beispiel ein Seitenteil der Drucktaste derart mit dem Verschlusselement wechselwirken, dass die Drucktaste nur dann herunterdrückbar ist, wenn die Elemente sich nicht gegenseitig berühren. Vorzugsweise ist das Verschlusselement ein in zumindest eine eitenwandung der Drucktaste eingreifender Bolzen, der über einen Schlossmechanismus wahlweise mit der Drucktaste in Wechselwirkung gelangt oder nicht. Dabei kann der Bolzen normalerweise federvorgespannt sein, um bei einer sogenannten Öffnungsstellung des Schlossmechanismus in Ausgriff von der Drucktaste zu gelangen, damit diese betätigbar ist. Zu diesem Zweck ist nach einem eigenerfinderischen Vorschlag, der nicht nur im Zusammenhang mit Trägeranordnungen, sondern auch zum Beispiel mit Taschen, Koffern, Spielzeug, Möbel, Rollläden und ähnlichem, also mit all jenen Gegenständen, die zu verschliessen sind, verwendbar ist, der Bolzen oder ein gleichwirkendes Element derart ausgebildet sein, dass er zumindest einen seitlichen Vorsprung aufweist bzw. ein Vorsprung von jenem ausgeht, dem eine Aussparung eines um eine parallel zur Bolzenlängsachse verlaufende Drehachse verstellbaren Drehelements des Schlossmechanismus zugeordnet ist. Werden nun Vorsprung und Aussparung derart zueinander ausgerichtet, dass erstere jene durchsetzen kann, so wird der Bolzen aufgrund der diesen umgebenden Feder von der Drucktaste weggedrückt, so dass diese frei beweglich ist. Vorzugsweise weist der axial verschiebbare, radial unverdrehbare Bolzen zwei zum Beispiel diametral zueinander angeordnete Vorsprünge auf, denen jeweils ein dem jeweiligen Vorsprung angepasste Aussparung aufweisendes Drehelement zugeordnet ist. Das Drehelement selbst weist vorzugsweise Einkerbungen auf, die mit einer Rastfeder wechselwirken. Dadurch wird beim Verstellen des Rastelementes akustisch und fühlbar nur das Zusammenwirken von der Rastfeder mit den Einkerbungen wahrgenommen, ohne dass festgestellt werden kann, ob der von dem Bolzen abragende Vorsprung mit der Aussparung am Drehelement wechselwirkt oder nicht. Dadurch ist eine erhöhte Diebstahlsicherung gegeben.

Um die richtige Zuordnung zwischen den Drehelementen und den Vorsprüngen der Bolzen zu erzielen, können erstere von aussen sichtbar mit Symbolen wie zum Beispiel Zahlen versehen werden.

Die Drucktaste selbst ist vorzugsweise um eine senkrecht zur Profilschiene verlaufende Achse verschwenkbar, die ihrerseits vorzugsweise in dem der Profilschiene abgewandten Bereich verläuft. Selbstverständlich kann die Drucktaste auch in Richtung ihrer Bewegungsrichtung federvorgespannt sein, zum Beispiel durch eine Schraubenfeder.

Die Drucktaste selbst kann ein zum Kraftfahrzeugdach hin offener Hohlkörper mit rampenförmiger sichtbarer Oberfläche und von dieser ausgehenden Vorder- und Seitenflächen sein, deren Schnittkanten parallel oder im wesentlichen parallel zueinander verlaufen. Durch die rampenförmige obere Fläche ist beim Verschwenken um die senkrecht zur Profilschienenlängsachse verlaufende Achse sichergestellt, dass die Fussstücke der Halteelemente nahezu widerstandsfrei in die Profilschienen hineingeschoben bzw. aus diesen entfernt werden können.

Durch die erfindungsgemässe Lehre wird eine leicht bedienbare, diebstahlhemmende, immer funktionstüchtige Lösung angeboten.

Weitere Einzelheiten, Vorteile und Merkmale der Erfindung ergeben sich nicht nur aus den Ansprüchen, sondern auch aus den der Zeichnung zu entnehmenden bevorzugten Ausführungsbeispielen.

Es zeigen:

Fig. 1 eine perspektivische Teildarstellung einer erfindungsgemässen Trägeranordnung,

Fig. 2 eine Draufsicht eines Ausschnitts einer Trägeranordnung mit Drucktaste,

Fig. 3 eine Detaildarstellung der Drucktaste nach Fig. 2 und

Fig. 4 eine Rückansicht der Trägeranordnung nach Fig. 2.

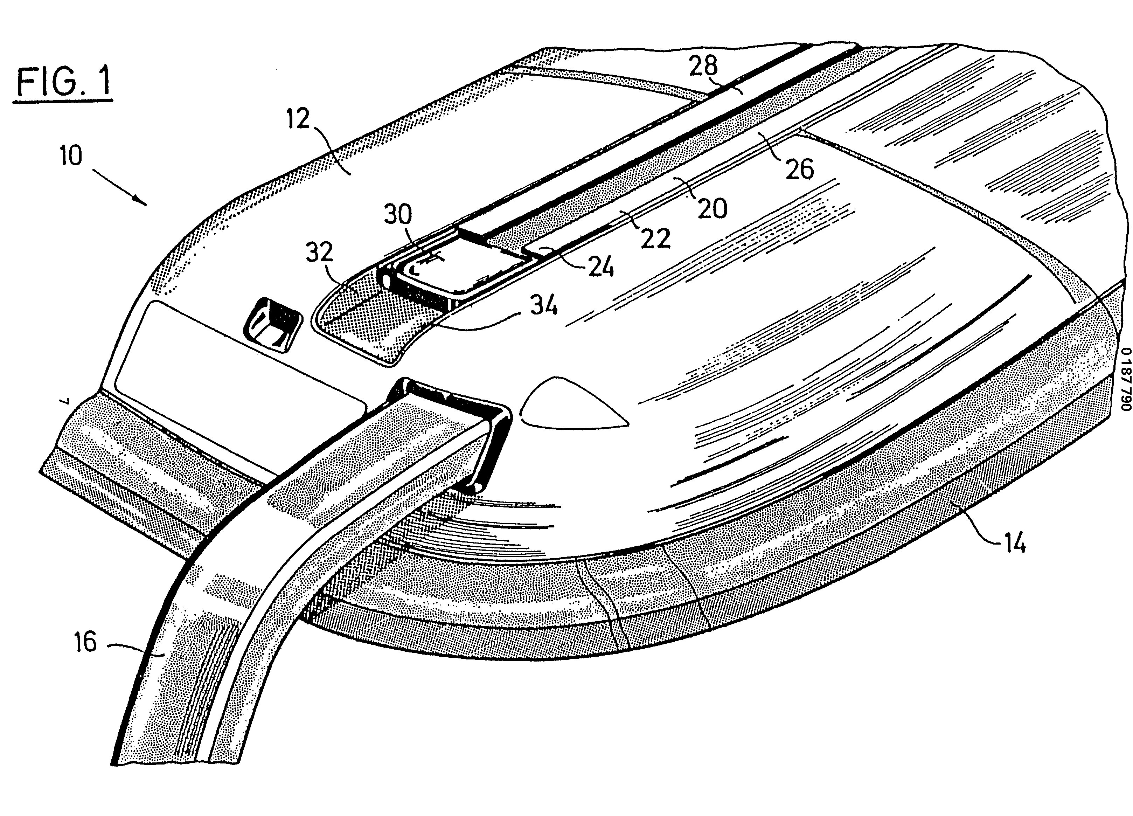

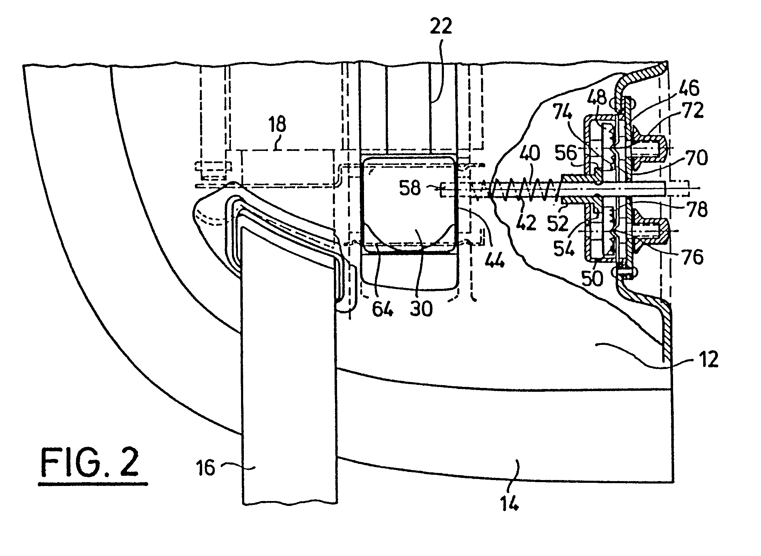

In Fig. 1 ist in perspektivischer Darstellung ein Träger 10 einer Dachträgeranordnung dargestellt, der im wesentlichen Merkmalen der Lehre der Europäischen Patentanmeldung 82103893.2 gehorcht. So besteht jedes Tragelement 10 aus einem karrosserieanpassungsfähigen schalenförmigen Basiselement 12, mit im Vorder- und Seintenbereich vorhandene m stoss- und schwingungsabsorbierendem Element wie Gummileiste 14, die unmittelbar auf einem Kraftfahrzeugdach aufliegt. Das Tragelement 10 wird über verstellbare Halteelemente 16 mit z.B. Kraftfahrzeugholmen oder Kraftfahrzeugdachrinnen verbunden, um so über die stabilen Seitenzonen des Kraftfahrzeugdaches die Lasten abzutragen. Die Halteelemente 14 werden dabei zumindest abschnittweise innerhalb des Basiselementes 12 verlaufende Führungselemente und Vierkantrohre geführt, wie es in Fig. 2 durch das Bezugszeichen 18 angedeutet werden soll.

In dem plattenförmigen Basiselement 12 ist in dessen Längsrichtung eine einen Schlitz 20 aufweisende Profilschiene 22 eingelassen. Der nicht dargestellte Endbereich wird dabei von dem Basiselement 12 so aufgenommen, dass die Profilschiene 22 von dieser Seite her nicht zugänglich ist. Das sichtbare andere freie Ende 24 der C-Profilschiene 22, die allgemein als U-förmig ausgebildetes Profilmaterial mit einander zugewandten freien Enden der sichtbaren Schenkel 26 und 28 bezeichnet werden kann, ist mit einer Drucktaste 30 verschliessbar, die von in dem Basiselement eingezogenen Seitenwandungen 32 und 34 geführt ist, die ihrerseits die Profilschiene 22 aufnehmen.

Die Drucktaste 30 wird mittels eines Federelementes 36 in ihrer angehobenen, die Profilschiene 22 von der Stirnseite her verchliessenden Stellung gehalten. Wirkt auf die Drucktaste 30 in Richtung auf das Kraftfahrzeugdach eine Kraft, so wird die Profilschiene 22 in einem Umfang freigegeben, um in dieses Fussstücke von Halterungen wie Surfbretthaltern, Skihaltern oder ähnliches einbringen zu können.

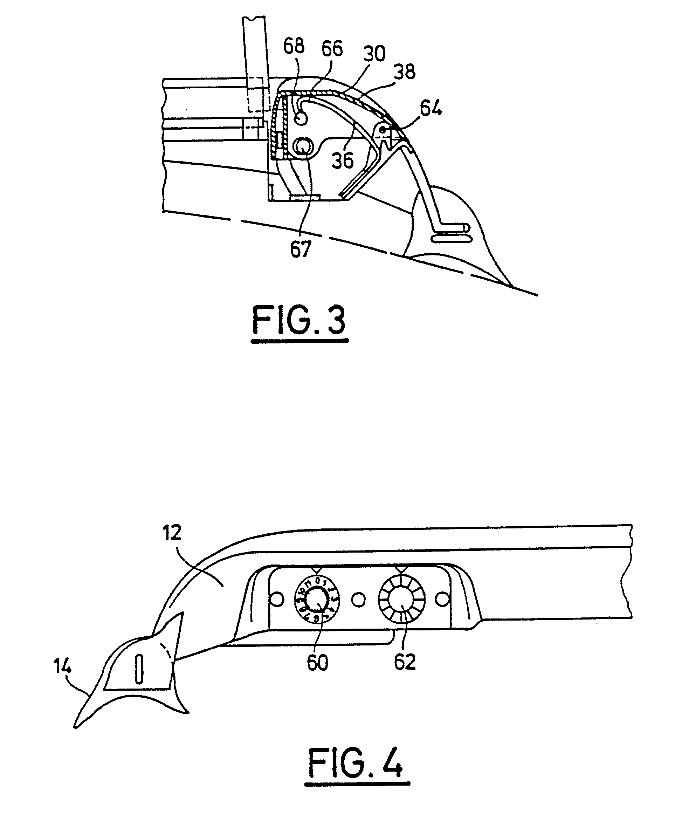

Wie insbesondere die zeichnerische Darstellung nach Fig. 3 zeigt, ist die obere Fläche 38 der Drucktaste 30 rampenförmig ausgebildet, um so in der herabgedrückten Position ein nahezu widerstandsfreies Entlanggleiten der Fussstücke der Halterungen zu der Profilschiene 22 hin zu ermöglichen. Gleiches gilt beim Herausnehmen der Halterungen aus der Profilschiene 22.

In weiterer Ausgestaltung der Erfindung kann die Drucktaste 30 durch ein Verschlusselement 40 in der angehobenen Stellung arretiert werden, um so sicherzustellen, dass in die Profilschiene 22 eingebrachte Halterungen nicht unkontrolliert aus jener entfernt werden können. Grundsätzlich ist die Ausbildung des Verschlusselementes beliebig wählbar, jedoch ist in bevorzugter Ausführungsform ein von einer Feder 42 umgebener Bolzen 40 gewählt, der in zumindest eine Seitenwandung 44 des Verschlusselementes eingreift. Der Bolzen 40 wirkt zusammen mit einem Schlossmechanismus 46 zusammen, durch den sichergestellt ist, dass der Bolzen 40 grundsätzlich entgegen der Federkraft 42 die Wandung 44 der Drucktaste 30 durchsetzt, um diese so zu verriegeln. Um eine Entriegelung vorzunehmen, also den Bolzen 40 aufgrund der von der Feder 42 hervorgerufenen Kraft in Ausgriff mit der Drucktaste 30 zu bringen, müssen Drehelemente 48 und 50 des Schlossmechanismusses 46 derart auf seitlich von dem Bolzen 40 oder von von einer dieser umgebenden Hülse 52 abragende Vorsprünge 54 bzw. 56 ausgerichtet sein, dass diese jene durchsetzen. Zu diesem Zweck weisen die Drehelemente 48 und 50 den Vorsprüngen 54 und 56 angepasste nicht näher dargestellte Ausnehmungen auf, die bei richtiger Ausrichtung von den Vorsprügen 54 und 56 durchsetzt werden. In diesem Fall kann der Bolzen 40 aufgrund der Federkraft die Drehelemente 48 und 50 durchsetzen, so dass das vordere Ende 58 des Bolzens 40 die Wandung 44 der Drucktaste 30 nicht mehr durchsetzt. Folglich kann die Drucktaste 30 in Richtung auf das Kraftfahrzeugdach bewegt werden, um so die Profilschiene 22 zugänglich zu machen. In Fig. 3 ist durch das Bezugszeichen 67 die Ausnehmung angegeben, mit der der Bolzen 40 bzw. dessen vorderer Abschnitt 58 mit der Drucktaste 30 wechselwirkt, wenn diese verriegelt ist. Mit der Ausnehmung 68 kann dann der Endabschnitt 58 in Eingriff gelangen, wenn die Drucktaste 30 in der abgesenkten Stellung gehalten werden soll, um also Befestigungselemente in die Profilschiene 22 einzubringen oder aus dieser zu entfernen.

Wie die Darstellung der Fig. 4 verdeutlicht, können die Drehelemente 48 und 50 von aussen sichtbar über Stellscheiben 60, 62 in Art eines Symbol- bzw. Zahlenschlosses eingestellt werden, um bei richtiger Kombination den Bolzen 40 frei bewegbar zu machen. Soll der Bolzen die Drucktaste 30 wieder verriegeln, so muss bei richtig eingestellter Zahlenkombination der Bolzen 40 entgegen der Federkraft 42 nach innen geschoben werden, um dann bei in Wechselwirkung mit der Drucktaste 30 gelangender Stellung die Stellscheiben 60 und 62 zu verdrehen. Dann wird erreicht, dass die Vorsprünge 54, 56 nicht mehr gleichzeitig die nicht dargestellten Aussparungen in den Drehelementen 48 und 50 durchsetzen können. Ergänzend sei bemerkt, dass die Drehelemente 48, 50 Einkerbungen 74, 78 aufweisen können, die mit Vorsprüngen 72, 76 einer Rastfeder 70 zusammenwirken. Dadurch erfolgt beim Verdrehen eines oder beider Drehelemente 48, 50 ein rastendes Wechselwirken zwischen den Einkerbungen 74, 78 und den Vorsprüngen 72, 76, wodurch weder akustisch, noch gefühlsmässig erfassbar wird, wann das Verschlusselement 40 richtig eingestellt ist. Demzufolge ist eine erhöhte Diebstahlsicherung gegeben.

Auch ist zu bemerken, dass die Drehelemente 48 und 50 glattflächig gelagert sind, wodurch ein Einfrieren und damit eine Unverdrehbarkeit nahezu ausgeschlossen ist.

Die Einstellung der Zahlscheiben 60 und 62 kann individuelle vorgenommen werden. Hierzu sind sie lösbar angeordnet, um bei den Bolzen 40 freigebender Stellung auf in Fig. 4 durch Pfeile angeordnete Markierungen eingestellt zu werden. Die den Bolzen 40 freigebende Stellung ist im übrigen auf der Rückseite das die Drehelemente 48, 50 aufnehmenden Gehäuse sichtbar, das selbst vorzugsweise ultraschallverschweisst und damit feuchtigkeitsgeschützt ausgebildet ist.

Gemäss der Detaildarstellungen nach Fig. 2 und 3, ist die Drucktaste 30 vorzugsweise um eine senkrecht zur Profillängsachse verlaufende Achse 64 verschwenkbar, die in dem der Profilschiene 22 abgewandten Bereich der Drucktaste 30 angeordnet ist. Auch erkennt man, dass das Federelement 36 eine vorzugsweise gebogene Blattfeder ist, die mit einem oberen Endabschnitt 66 mit der oberen Innenfläche der Drucktaste 30 in Wechsel- wirkung tritt. Selbstverständlich kann die Druckta- ste auch frei beweglich in einer in dem Basiselement 12 vorhandenen Ausnehmung angeordnet und gegen zum Beispiel eine Schraubenfeder sen- krecht zur Kraftfahrzeugdachoberfläche ver- schiebbar angeordnet sein.

Nach Fig. 1 ist die Drucktaste 30 in dem Basiselement derart integriert, dass sich nicht nur ein gefälliges Äusseres ergibt, sondern auch aerodynamisch keine Widerstände aufgebaut werden. Auch wird durch die Fig. 2 und 4 veranschaulicht, dass der Schlossmechanismus 46 abströmseitig an dem Basiselement 12 angeordnet ist, so dass eine Verschmutzung aufgrund des Fahrwindes nicht gegeben ist. Vorzugsweise ist der Schlossmechanismus 46 in einer Einbuchtung auf der Rückseite des Basiselementes 12 eingelassen, um so einen weiteren Schutz zu bieten.

**Patentansprüche**

1. Träger zur Aufnahme von auf ein Kraftfahr- zeugdach aufzubringenden Lasten mit vorzugs- weise im Abstand zueinander in Querrichtung zum Fahrzeugdach angeordneten Tragelementen (10), die zur Aufnahme von Befestigungselementen wie zum Beispiel Skihaltern Profilschienen (22) aufweisen, dadurch gekennzeichnet, dass zumindest ein freies Ende (24) der Profilschiene (22) oder eine in der Profilschiene zur Aufnahme von Fuss- abschnitten der Befestigungselemente vorhande- ne Erweiterung mittels einer Drucktaste (30) verschliessbar ist.

2. Träger nach Anspruch 1, dadurch gekennzeichnet, dass ein freies Ende (24) der Profilschiene (22) mit der Drucktaste (30) verschliessbar ist und das andere freie Ende der Profilschiene von dem Tragelement (12) selbst verschlossen ist.

3. Träger nach Anspruch 1 oder Anspruch 2, dadurch gekennzeichnet, dass die Drucktaste (30) mittels eines Federelementes (36) in der die Profil- schiene (22) zumindest teilweise verschliessen- den Stellung haltbar ist.

4. Träger nach zumindest einem der vorhergehenden Ansprüche, dadurch gekennzeichnet, dass in die Drucktaste (30) ein ein Herunterdrük- ken verhinderndes Verschlusselement (40) ein- greift.

5. Träger nach zumindest Anspruch 1, dadurch gekennzeichnet, dass die Drucktaste (30) um eine senkrecht zur Profilschiene (22) verlaufende Achse (64) schwenkbar ist, die vorzugsweise in dem der Profilschiene abgewandten Bereich der Drucktaste verläuft.

6. Träger nach zumindest Anspruch 1, dadurch gekennzeichnet, dass die Drucktaste (30) in Abschnitten von Seitenwandungen (32, 34) geführt ist, die die Profilschiene (22) seitlich begrenzen.

7. Träger nach Anspruch 4, dadurch gekenn- zeichnet, dass das Verschlusselement vorzugswei- se ein federvorgespannter Bolzen (40) ist, der über einen Schlossmechanismus (46) aus der die Drucktaste (30) verriegelnden Stellung bewegbar ist.

8. Träger nach Anspruch 7, dadurch gekennzeichnet, dass von dem Bolzen mittelbar oder unmittelbar zumindest ein seitlicher Vorsprung (54, 56) ausgeht, dem eine Aussparung eines um eine parallel zur Bolzenlängsachse verlaufende Drehachse verstellbaren Drehelements (48, 50) zugeordnet ist.

9. Träger nach Anspruch 7, dadurch gekennzeichnet, dass von dem axial verschiebbaren, vorzugsweise radial unverdrehbaren Bolzen mittelbar oder unmittelbar vorzugsweise zwei Vorsprünge (54, 56) ausgehen, denen jeweils eine in einem Drehelement (48, 50) eingelassene Aussparung zugeordnet ist.

10. Träger nach zumindest Anspruch 1, dadurch gekennzeichnet, dass die Drucktaste ein zum Kraftfahrzeugdach hin offener Hohlkörper mit rampenförmiger sichtbarer oberer Fläche (38) und von dieser ausgehenden Vorder- und Seitenflächen ist, deren Schnittkanten parallel oder im wesentlichen parallel zueinander verlaufen.

11. Träger nach Anspruch 4, dadurch gekennzeichnet, dass das Verschlusselement (40) zumindest eine Seitenwandung (44) der Drucktaste (30) durchsetzt.

12. Träger nach Anspruch 7, dadurch gekennzeichnet, dass der Schlossmechanismus (46) abströmseitig an dem Tragelement (12) angeordnet ist.

13. Verriegelung für insbesondere eine Trägeranordnung nach Anspruch 1, dadurch gekennzeichnet, dass die Verriegelung einen federvorgespannten, axial verschliebbaren Bolzen (40) umfasst, von dem Vorsprünge (54, 56) ausgehen, denen jeweils eine in einem Drehelement (48, 50) eingelassene Aussparung zugeordnet ist.

## Claims

1. A carrier device for receiving burdens to be placed on the roof of a motor vehicle with carrier elements (10) preferably spaced to one another transverse to the vehicle roof, having C profile rails for receiving attachment elements such as ski carriers, characterized in that at least one free end (24) of the C profile rail (22) or an extension provided in the C profile rail for receiving the base sections of attachment elements is lockable by means of a push button (30).

2. A carrier device according to Claim 1, characterized in that one free end (24) of the C profile rail (22) is lockable with the push button (30) and the other free end of the C profile rail is locked itself by the carrier element (12).

3. A carrier device according to Claim 1 or Claim 2, characterized in that the push button (30) is holdable by means of a spring element (36) in the position at least partly locking the C profile rail (22).

4. A carrier device according to at least one of the previous claims, characterized in that a locking element (40) preventing pressing down engages in the push button (30).

5. A carrier device according to at least Claim 1, characterized in that the push button (30) is swivellable about an axis (64) running vertical to the C profile rail (22), said axis preferably running in the area of the push button facing away from the C profile rail.

6. A carrier device according to at least Claim 1, characterized in that the push button (30) is guided in sections of side walls (32, 34) which laterally limit the C profile rail (22).

7. A carrier device according to Claim 4, characterized in that the locking element is preferably a spring-loaded bolt (40) which is movable by a lock mechanism (46) out of the position locking the push button (30).

8. A carrier device according to Claim 7, characterized in that at least one lateral projection (54, 56) extends indirectly or directly from the bold, said projection being associated with a recess of a rotary element (48, 50) adjustable about a rotary axis running parallel to the longitudinal axis of the bolt.

9. A carrier device according to Claim 7, characterized in that preferably two projections (54, 56) extend indirectly or directly from the axially displaceable, preferably radially unrotatable bolt, said projections being each associated with a recess provided in a rotary element (48, 50).

10. A carrier device according to at least Claim 1, characterized in that the push button is a hollow element open to the vehicle roof having ramp-like visible upper surface (38) and front and lateral surfaces extending therefrom, the cut edges of said surfaces being parallel or substantially parallel to one another.

11. A carrier device according to Claim 4, characterized in that the locking element (40) passes through at least one side wall (44) of the push button (30).

12. A carrier device according to Claim 7, characterized in that the lock mechanism (46) is arranged on the down current side of the carrier element (12).

13. An interlocking device particularly for a carrier device according to Claim 1, characterized in that the interlocking device comprises a spring-loaded, axially displaceable bolt (40), from which projections (54, 56) extend, said projections each being associated with a recess provided in a rotary element (48, 50).

## Revendications

1. Porte-charges pour la fixation de charges à mettre sur un toit de véhicule avec, de préférence, des éléments porteurs (10) espacés les uns des autres et disposés perpendiculairement au toit du véhicule, lesquels présentent des rails profilés (22) destinés à recevoir des éléments de fixation, par exemple des porte-skis, caractérisé par le fait qu'au minimum une extrémité libre (24) du rail profilé (22) ou une extension, prévue dans le rail profilé pour recevoir la base d'éléments de fixation, peut être verrouillée à l'aide d'une touche (30).

2. Porte-charges d'après la revendication n° 1, caractérisé par le fait qu'une extrémité libre (24) du rail profilé (22) est verrouillable à l'aide d'une touche (30) et que l'autre extrémité libre du rail profilé est verrouillée par l'élément porteur (12) luimême.

3. Porte-charges d'après la revendication n° 1 ou 2, caractérisé par le fait que la touche (30) peut, à l'aide d'un élément-ressort, être maintenue dans la position verrouillant, au minimum partiellement, le rail profilé (22).

4. Porte-charges d'après au minimum l'une des revendications précédentes, caractérisé par le fait qu'un élément de verrouillage (40), empêchant tout abaissement, s'engage dans la touche (30).

5. Porte-charges d'après au minimum la revendication n° 1, caractérisé par le fait que la touche (30) pivote autour d'un axe (64) orienté perpendiculairement au rail profilé (22), axe qui, de préférence, suit un tracé dans la zone de la touche opposée au rail profilé.

6. Porte-charges d'après au minimum la revendication n° 1, caractérisé par le fait que la touche (30), est par sections, guidée par des parois latérales (32, 34) qui limitent latéralement le rail profilé (22).

7. Porte-charges d'après la revendication n° 4, caractérisé par le fait que l'élément de verrouillage est de préférence un goujon (40) précontraint par ressort, goujon déplaçable, à l'aide d'un mécanisme de serrure (46), hors de la position verrouillant la touche (30).

8. Porte-charge d'après la revendication n° 7, caractérisé par le fait que du goujon part, directement ou indirectement, au minimum une saillie latérale (54, 56) à laquelle est adjoint un évidement d'un élément pivotant (48, 50) réglable autour d'un axe pivotant qui suit un tracé parallèle à l'axe longitudinal du goujon.

9. Porte-charges d'après la revendication n° 7, caractérisé par le fait que partent directement ou indirectement du goujon, déplaçable axialement, de préférence non pivotant dans le sens radial, deux saillies (54, 56) à chacune desquelles est adjoint un évidement pratiqué dans un élément pivotant (48, 50).

10. Porte-charges d'après au minimum la revendication n° 1, caractérisé par le fait que la touche est un corps creux ouvert en direction du toit du véhicule, avec face (38) supérieure visible en forme de rampe et que de celle-ci partent des faces avant et latérales dont les arêtes de coupe suivent, les unes par rapport aux autres, un tracé parallèle ou essentiellement parallèle.

11. Porte-charges d'après la revendication n° 4, caractérisé par le fait que l'élément de verrouillage (40) traverse au minimum une paroi latérale (44) de la touche (30).

12. Porte-charges d'après la revendication n° 7, caractérisé par le fait que le mécanisme de serrure (46) est disposé en aval sur l'élément porteur (12).

13. Dispositif de verrouillage pour notamment un dispositif porte-charges d'après la revendication n° 1, caractérisé par le fait que celui-ci comprend un goujon (40) précontraint par ressort, déplaçable axialement, duquel partent deux saillies (54, 56), à chacune desquelles est adjoint un évidement pratiqué dans un élément pivotant (48, 50).

6

FIG. 1

10

12

16

32

30

24

22

20

26

28

34

14

0 187 790

# FIG. 2

FIG.3

FIG.4